# EUROPEAN PATENT SPECIFICATION

(11) **EP 2 956 726 B1**
(45) Date of publication and mention of the grant of the patent: **24.04.2019**
(21) Application number: 14751266.9
(22) Date of filing: 11.02.2014
(51) Int. Cl.: B01L 7/00, F27B 17/02, F27B 9/16, G01N 1/44, F27D 3/00, G01N 35/04

(54) **A FURNACE FOR PREPARING FUSED (HOMOGENISED) SAMPLES**
OFEN ZUR HERSTELLUNG KONDENSIERTER (HOMOGENISIERTER) PROBEN
FOUR POUR LA PRÉPARATION D'ÉCHANTILLONS (HOMOGÉNÉISÉS) FUSIONNÉS

(30) Priority: 12.02.2013 AU 2013900452; 18.02.2013 AU 2013900519
(43) Date of publication of application: 23.12.2015
(73) Proprietor: IMP Group (Pty) Ltd., Osborne Park, Western Australia 6017 (AU)
(72) Inventor: HOHENSTEIN, Boyne Friederich, City Beach Western Australia 6015 (AU)
(74) Representative: Zinkler, Franz
(86) International application number: PCT/AU2014/000107
(87) International publication number: WO 2014/124484

(56) References cited:
- EP-A1- 1 455 175
- EP-A1- 1 455 175
- EP-A2- 2 458 388
- WO-A1-03/098140
- WO-A1-03/098140
- US-A- 5 315 091

## Description

### Field of the Invention

The present invention broadly relates to a furnace for preparing fused (homogenised) samples.

### Background of the Invention

A variety of samples such as mineral samples, cement samples and other materials need to be homogenized (or "fused") before they can be analysed by analytical techniques such as X-Ray fluorescence (XRF) spectrometric analysis, inductively-coupled plasma mass spectrometry (ICP MS) and other analytical techniques. Sample preparation typically involves mixing the sample with a flux and positioning the resultant mixture into a furnace that is heated to form a homogeneous melt.

In the case of XRF analysis the homogeneous melt is then allowed to cool in a crucible to form a glass bead which is then analysed or the homogenized melt is cast into a casting dish that is usually preheated and allowed to cool prior to the analysis.

PCT publication number WO2003098140 discloses a furnace that has a carousel for movement of the batch of samples about an axis.

US 5315091 discloses a resistively heated sample preparation apparatus.

EP 1455175 discloses a mixed sample moisture or ash analyser. The analyser comprises a furnace with a carousel for rotating the samples. Loading and unloading of the carousel within a housing of the disclosed furnace is performed through access hole which is positioned in a lid portion of the housing of the furnace. A robotic arm accesses the interior of the housing of the furnace through the hole of the housing of the furnace to load or unload the carousel.

The present invention provides further improvement.

### Summary of the Invention

The present invention provides a furnace for preparing fused samples according to the subject-matter of claim 1. The said furnace discloses a furnace for preparing fused (homogenised) samples, the furnace comprising:
a housing;
a carousel positioned within the housing and arranged to rotate about an axis, the carousel having a plurality of receiving stations, the receiving station being arranged such that crucibles with the samples and also casting dishes can be received by the carousel;
a heater arranged to heat the samples to a temperature that is sufficient to melt the samples in the crucibles; and
at least one mechanism for:
   loading and unloading the carousel with the crucibles;
   loading and unloading the carousel with the casting dishes; and
   decanting the melted samples from the crucibles into the casting dishes.

The at least one mechanism may be arranged such that the crucibles and the casting dishes are moved separately, but typically is arranged to move at least one crucible and at least one casting dish simultaneously.

The present furnace is for preparing fused (homogenised) samples and heating casting dishes, the furnace comprising:
a housing;
a carousel positioned within the housing and arranged to rotate about an axis, the carousel having a plurality of receiving stations, each receiving station being arranged such that crucibles with the samples and also casting dishes can be received by the carousel;
a heater arranged for heating the samples to a temperature that is sufficient to melt the samples in the crucibles; and
at least one mechanism for:
   loading and unloading the carousel with the crucibles; and
   loading and unloading the carousel with the casting dishes;
wherein the at least one mechanism is arranged to load the carousel simultaneously with at least one crucible and at least one casting dish.

The furnace is arranged for decanting melted samples from the crucibles into the casting dishes.

The heater may be arranged for heating both the crucibles with the samples and the casting dishes.

The at least one mechanism may be arranged such that one crucible and one respective casting dish are moved together.

The at least one mechanism for moving may be arranged for manual operation, but typically is arranged for automatic operation controlled by a controlling system.

The at least one mechanism may comprise a respective component mechanism that is arranged to load the carousel simultaneously with the crucibles and the casting dishes and a respective component mechanism that is arranged to decant the melted samples from the crucibles into respective casting dishes.

Each receiving station of the carousel may have at least one aperture for receiving at least crucible and at least one casting dish.

In one specific embodiment each receiving station comprises one aperture for receiving one crucible and one casting dish. The aperture of the receiving station may be arranged such that the crucible and the casting dish are positioned along a radius of the carousel when received by the aperture. The aperture may comprise a first portion for receiving one of the casting dish and the crucible and a second portion for receiving the other one of the crucible and the casting dish. The first and second portions may be positioned along a radius of the carousel.

The carousel may also comprise two or more component carousels that are positioned above one another. The receiving stations of a first component carousel may have apertures that are arranged for receiving the crucibles and the receiving stations of a second carousel may be have apertures arranged for receiving respective casting dishes. Alternatively, the receiving stations of both the
first and the second component carousel may have apertures that are arranged for receiving crucibles and casting dishes for example in an alternating manner.

The component mechanism for decanting may be positioned inside the housing of the furnace or outside of the housing.

The heater may be arranged to heat the crucibles with the respective sample mixtures, such as a suitable mixture of a mineral sample material and a flux, and the casting dishes to a temperature to effect melting of each sample and flux mixtures.

The at least one mechanism is arranged to move the crucibles and the casting dishes in a radial direction of the carousel. The housing typically has an access port in a side wall portion through which in use the crucibles and the casting dishes are moved in a substantially horizontal direction. The access port may comprise an access door that is arranged to close the access port.

The at least one mechanism comprises a first arm having a portion for supporting a crucible and/or a casting dish and being arranged for contraction and extension along a length of the arm whereby the first arm is arranged such that a crucible and/or a casting can be moved between a receiving station of the carousel and a position that is remote from the carousel. In one specific embodiment of the present invention the first arm is arranged such that a crucible and a respective casting dish can be moved simultaneously between a receiving station of the carousel and a position that is remote from the carousel.

The at least one mechanism comprises a second arm having a portion for supporting a crucible and/or a casting dish and being arranged for contraction and extension along a length of the arm whereby the second arm is arranged such that a crucible and/or a casting can be moved between a receiving station of the carousel and a position that is remote from the carousel. In the specific embodiment of the present invention the second arm is arranged such that a crucible and a respective casting dish can be moved between a receiving station of the carousel and a position that is remote from the carousel. The first arm may be arranged for positioning the crucibles and the casting dishes into the receiving stations of the carousel and the second arm may be arranged for removing the crucibles and the casting dishes from the receiving stations.

The furnace may also comprise a device for measuring temperature.

The furnace may comprise a control system that is arranged to control operation of the heater, the carousel and the at least one mechanism. The control system may be configured to effect removal of a crucible and typically also a respective casting dish after the sample has been treated in a manner such that the sample forms a homogeneous glass when cooled subsequent to the heat treatment.

The control system may be arranged to control operation of the furnace in an automated manner.

The control system may comprise a microprocessor and may be arranged to control operation of the furnace such that the first arm in use positions a sequence of crucibles and casting dishes into a sequence of receiving stations and the heater subsequently heats the samples in the crucibles and the casting dishes. Further, the control system may be arranged to control the furnace such that the second arm removes the crucibles and the casting dishes sequentially from the receiving stations after completion of a predetermined heat treatment. The control system may be arranged such that loading, rotation by the carousel, heat treatment, unloading and decanting are performed in an automated manner. Further, the control system may be arranged such that parameters are selectable by a user. For example, the parameters may include a rotation rate of the carousel, a temperature of the furnace or a duration of the heat treatment.

The control system in accordance with one example comprises a timer for timing a period of time during which the samples are exposed to the heat treatment. The control system with the timer may be arranged to interrupt the heat treatment after a predetermined time or effect an alarm signal. The control system may comprise a memory device for storing control parameters.

The furnace may be arranged to impart a rocking, oscillating or vibrating motion to the samples in the crucibles when the crucibles are positioned in the receiving stations and exposed to heat treatment and which may be controlled by the control system.

The furnace may comprise an arrangement for lifting and lowering the crucibles and/or casting dishes relative to the at least one mechanism. In this case, the control system may be arranged such that the first arm delivers a crucible and typically also a respective casting dish to a position over a respective receiving station and the arrangement for lowering and lifting lifts the carousel such that the crucible typically also the respective casting dish is positioned in the aperture of the respective receiving station.

The control system may be arranged such that, after completion of heat treatment, the arrangement for lowering and lifting the crucibles and/or casting dishes lowers the carousel to a position below a crucible and/or a casting dish on the second arm and the second arm then moves the crucible and/or the casting dish to a position outside the housing of the furnace.

Further, the furnace may comprise a conveying system that is arranged for conveying a sequence of crucibles and casting dishes to the first arm and a sequence of crucibles and casting dishes away from the second arm of the at least one mechanism. The furnace may be arranged such that the conveying system moves the crucibles and the casting dishes to a remote location after decanting the melted sample mixture from the crucibles into the casting dishes.

In one embodiment the carousel is one of a plurality of carousels. For example a first carousel may be positioned over a second carousel and arranged for rotation about the same axis.

The access door of the access port may be arranged for remote controlled operation and the control system typically is arranged to control the operation of the access door in an automated manner to allow operation of the at least one mechanism. The control system may be arranged to control the operation of the access door in a manner such that loss of thermal energy through the access port is reduced or minimised.

The present invention provides in a third aspect a furnace system for preparing fused (homogenised) samples, the furnace system comprising:
a first furnace for preheating of the samples; and
a second furnace for receiving crucibles with samples after preheating of the samples, the second furnace being in accordance with the first aspect of the present invention.

The invention will be more fully understood from the following description of specific embodiments of the invention. The description is provided with reference to the accompanying drawings.

### Brief Description of the Drawings

Figure 1 shows a top view of a furnace for preparing fused (homogenised) samples and heating casting dishes in accordance with an embodiment of the present invention;
Figures 2 and 3 show schematic cross-sectional side views of the furnace;
Figures 4 and 5 show top views of the furnace;
Figures 6 to 8 show schematic cross-sectional side views of the furnace;
Figures 9 and 10 show schematic perspective views of the furnace; and
Figure 11 is s flow chart illustrating a method of preparing fused (homogenised) samples and heating casting dishes in accordance with an example useful to understand the present invention.

### Detailed Description of Specific Embodiments

Embodiments of the present invention relate to a furnace for preparation of fused (homogenized) samples suitable for analytical techniques, such as X-ray fluorescent spectrometry or mechanical analysis techniques such as inductively-coupled plasma mass spectrometry.

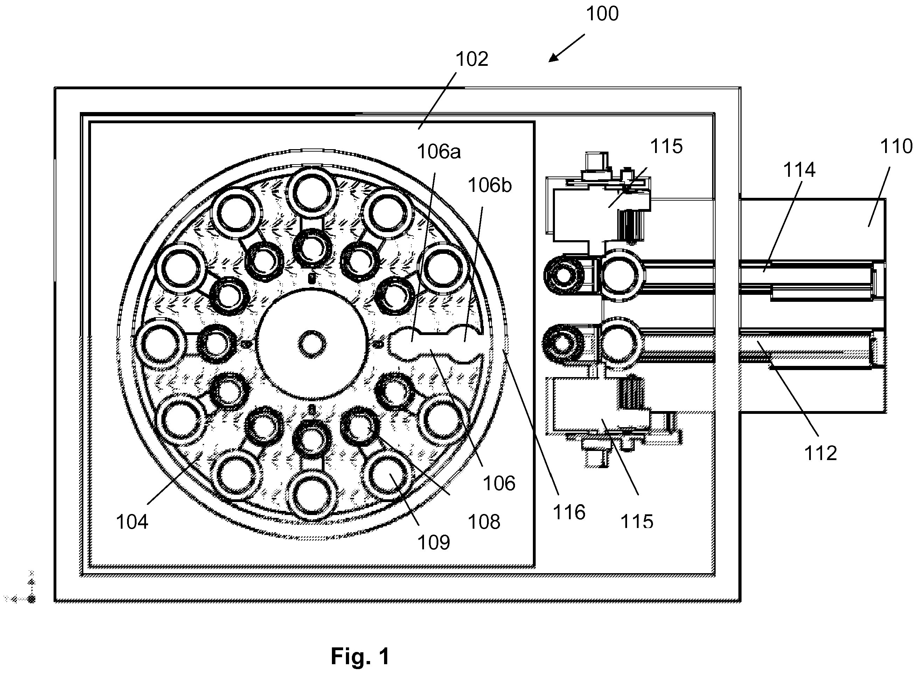

Referring now to Figures 1 to 10, a furnace for, and a method of, preparing fused (homogenised) samples and
heating casting dishes in accordance with embodiments of the present invention is now described.

Sample preparation typically involves mixing the sample with a flux and weighing the resultant sample mixture. The sample with flux is then placed in a furnace 100 in which the sample mixture that is heated to form a homogeneous melt.

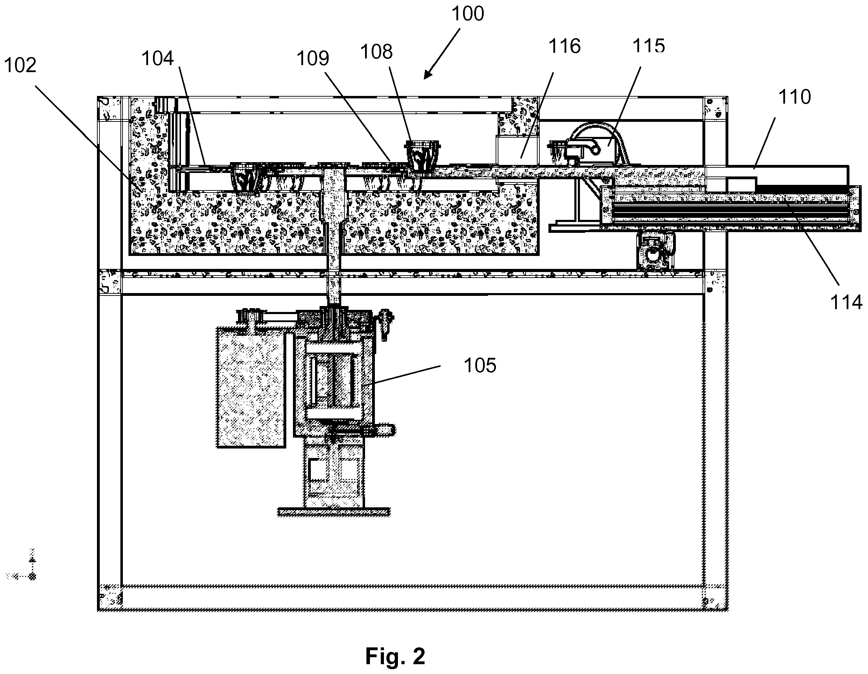

The furnace 100 comprises a housing 102 in which a carousel 104 is positioned. The carousel 104 is arranged for rotation about an axis and Figures 2 and 6 to 8 show a drive 105 of the carousel 104. The carousel 104 has a plurality of receiving stations 106 that each have an aperture and the apertures are positioned in a ring-like manner along the periphery of the carousel 104. Each aperture of a receiving station 106 is sized to receive and hold a crucible 108 and a respective casting dish 109. The crucibles 108 and the respective casting dishes 109 have radial lips that extend in a ring-like manner at an upper portion of the crucibles 108 and the casting dishes 109, which rest on the carousel 104 when the crucibles 108 and the casting dishes 109 are positioned in the receiving stations 106.

The furnace 100 is arranged for heating samples in the crucibles 108 and the casting dishes 109 to a temperature suitable for melting the samples to generate fused (homogenised) samples that form a homogeneous glass bead when cooled and are suitable for the above-mentioned analysis techniques. The samples for fusion may for example include mined materials (in powder form) or any other type of mineral that is suitably prepared.

The furnace 100 also comprises a mechanism 110 for moving the crucibles 108 and the casting dishes 109 between respective receiving stations 106 and a location that is exterior to the housing 102. The mechanism 110 comprises a first arm 112 and a second arm 114. The first arm 112 is arranged for moving the crucibles 108 and the casting dishes 109 from the exterior position to a receiving station 106 of the carousel 104. The second arm 114 is arranged for moving the crucibles 108 and the casting dishes 109 out of receiving stations 106 and to the exterior location. Both arms 112 and 114 have suitable support surfaces for supporting the crucibles 108 and the casting dishes 109 and are arranged for moving by suitable electrical or hydraulic means in horizontal directions.

Each aperture of each receiving station 106 has a first portion 106a and a second portion 106b. Each first portion 106a and each respective second portion portions 106b is positioned along a radius of the carousel 104. The first portions 106a have a diameter that is smaller than that of the second portions 106b. In the illustrated embodiment the crucibles 108 have an outer diameter (below the described lip) that is smaller than that of the casting dishes 109 and the first and second portions 106a and 106b have corresponding inner diameters. However, a person skilled in the art will appreciate that various other arrangements are possible.

Figure 1 shows crucibles 108 and respective casting dishes 109 positioned on the first arm 112 and the second arm 114.

Figure 2 shows the first arm 112 after it moved a crucible 108 and a respective casting dish 109 over a receiving station 106 of the carousel 104 to load the carousel.

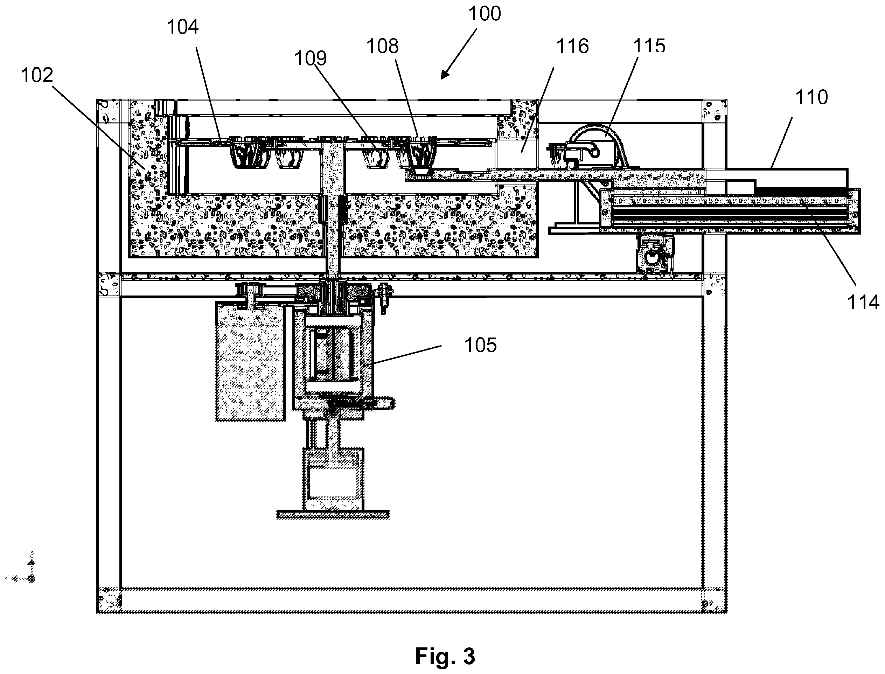

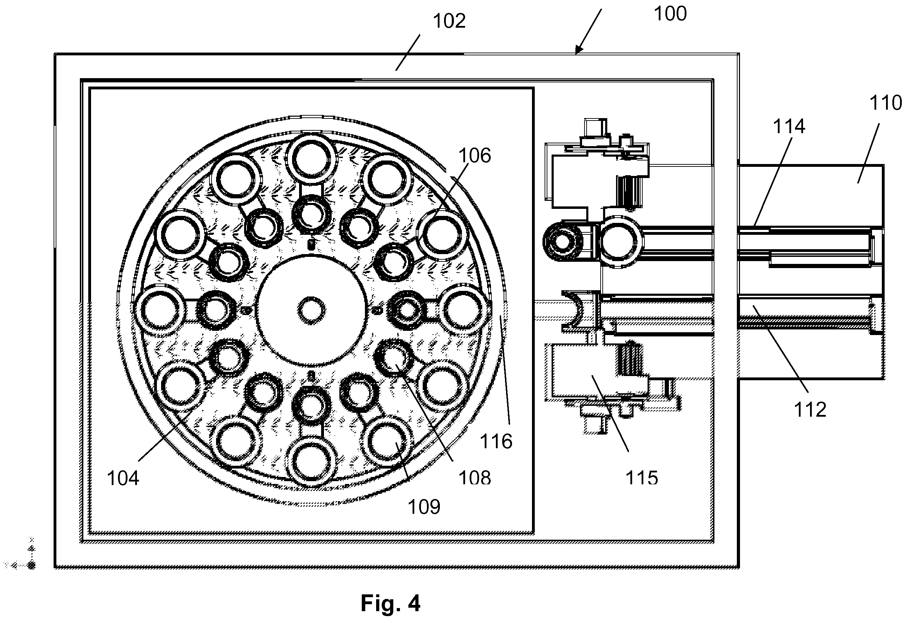

The carousel 104 comprises a mechanism for lifting the carousel 104 along an axis of the carousel 104. Figures 3 and 4 shows the carousel 104 after it has been lifted to receive crucible 108 and a casting dish 109 in respective aperture portions 106a and 106b of the receiving station 106.

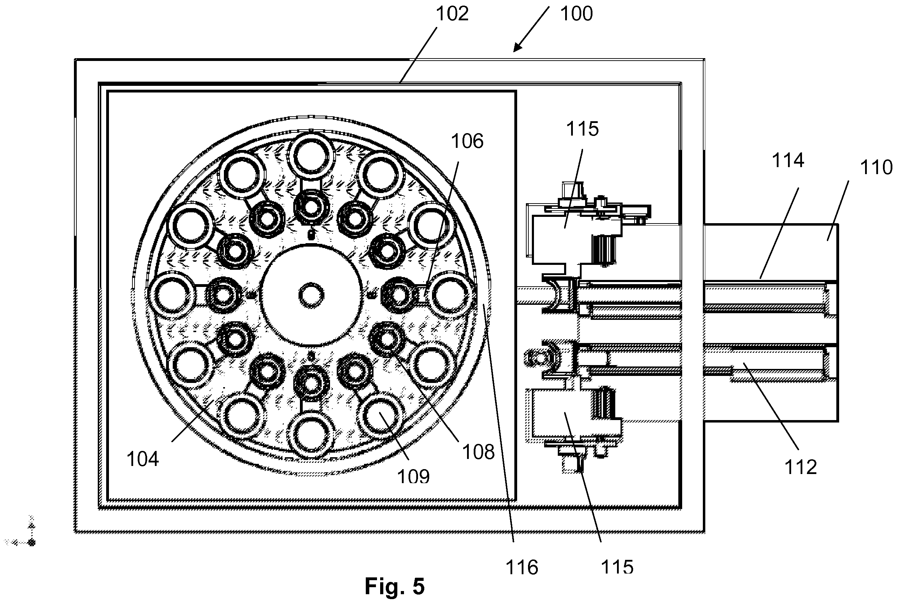

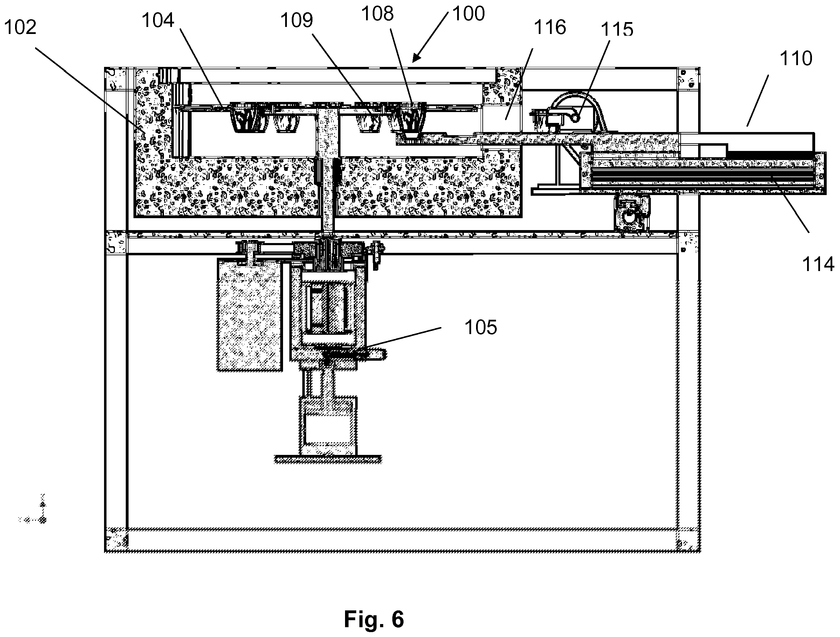

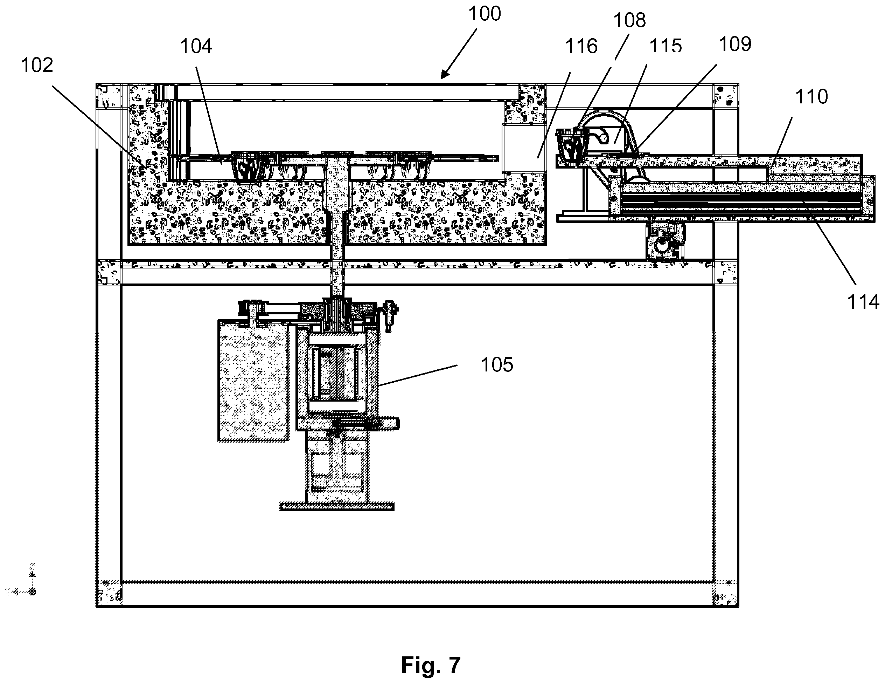

Figures 5 and 6 show the first arm 112 in a retracted configuration after leaving the carousel 104 and the second arm 114 in an extended configuration with end portions of the first arm 114 being positioned at another one of the crucibles 108 and another one of the casting dishes 109 after completion of the heat treatment for the respective sample. The carousel 104 is then lowered such that the crucible 108 and the casting dish 109 is positioned on a support surface of the second arm 114 and the second arm 114 is subsequently contracted, which is illustrated in Figure 7.

The furnace 100 also comprises a mechanism 115 for decanting the sample from the crucibles 108 into respective casting dishes 109. The mechanism 115 for decanting the samples is arranged to grip a crucible 108 and rotate the crucible 108 by 180° about a horizontal axis such that the respective sample is decanted into an adjacent casting dish 109. In the embodiment as illustrated in Figures 1 to 10, the mechanism for decanting 115 forms a part of the mechanism 110 for moving the crucibles 108 and the casting dishes 109 and is operated by suitable electrical or hydraulic means. In the illustrated embodiment the mechanism 110 for moving the crucibles 108 and the casting dishes 109 comprises two of the mechanisms 115 for decanting for decanting and one of the mechanisms 115 is positioned at each arm 112 and 114. A person skilled in the art will appreciate that in an alternative variation only the second arm 114 may comprise the mechanism for decanting 115.

The mechanism for decanting 115 is arranged for decanting of the sample at a position outside the housing 102. However, a person skilled in the art will appreciate that the in a variation of the described embodiment the mechanism 115 for decanting the sample may also be positioned and arranged for decanting the sample at a position within the housing 102.

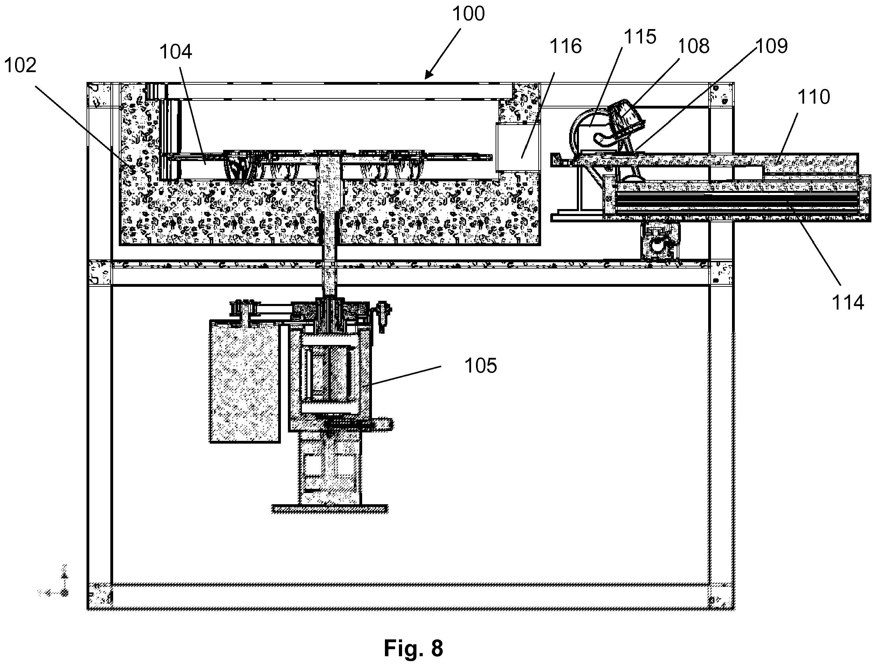

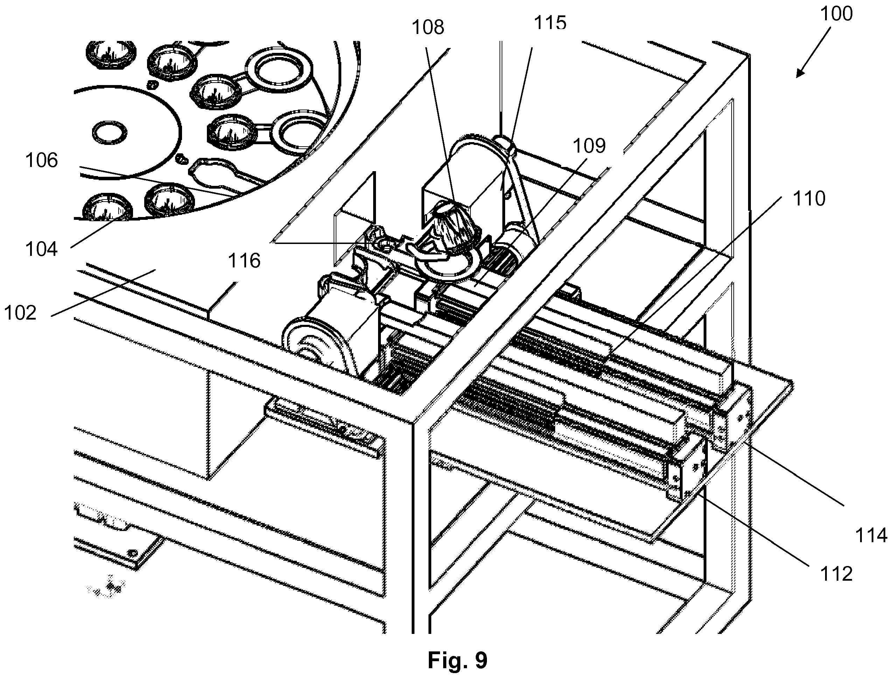

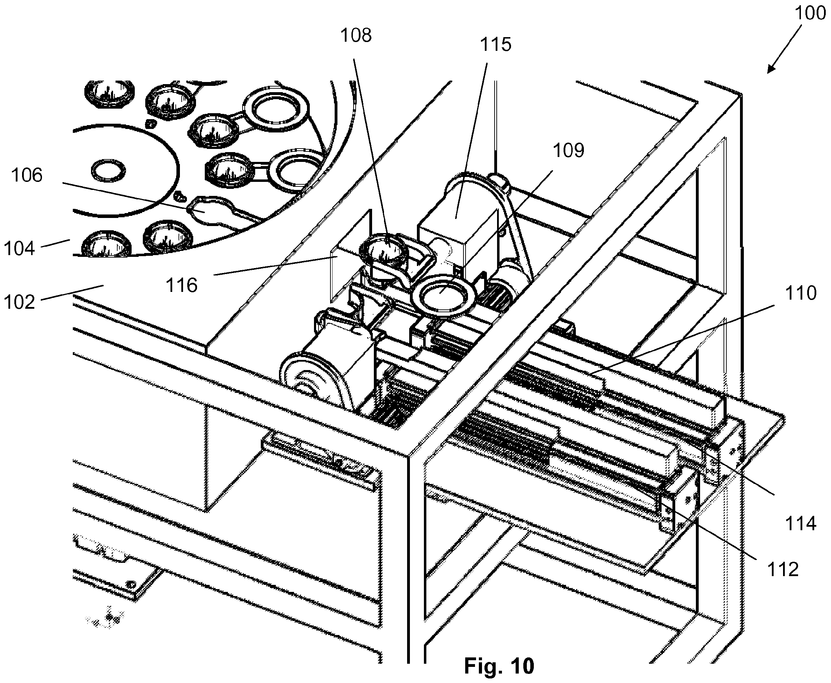

Figures 8 and 9 show the mechanism 115 for decanting during decanting of a sample from a crucible 108 into a respective casting dish 109. Figure 10 shows the mechanism 115 for decanting after decanting has been completed and before the crucible 108 and the casting dish 109 are conveyed by a suitable conveying system to a location that is remote from the furnace 100.

After decanting the samples in the casting dishes 109 (which are formed from platinum), the samples are allowed to cool such that a glass bead is formed, which subsequently is analysed using X-ray fluorescence (XRF) techniques or other suitable techniques. The glass beads are removed from the casting dishes 109, which are cleaned for reuse.

A person skilled in the art will appreciate that such a conveying system may take any suitable form and such systems are known in the art.

The housing 102 of the furnace 100 has an access port 116 at a side portion through which the arms 112 and 114 move the crucibles 108 and the casting dishes 109. The access port 116 has an access door (not shown) that can be remotely opened and closed when the first or second arms 112, 114 are in use. In variations of the described embodiment the furnace 100 may also comprise more than one carousel 104 and the carousels may be positioned over one another and arranged for rotation about a common axis driven by the drive 105. In this case the furnace 100 comprises a suitable means for moving all carousels up and down such that the arms 112 and 114 are able to operate as described above. Alternatively, the furnace 100 may also comprise more than one mechanism for moving the crucibles 108 and casting dishes 109 and the mechanisms may be stacked on top of one another in the same manner as the carousels.

The furnace 100 comprises control electronics (not shown) that is arranged to allow automated operation of the furnace 100. Further, the furnace 100 comprises temperature sensors (not shown) and is arranged such that a user can select a temperature and a duration of the heat treatment. These parameters may be preselected and the control electronics is arranged to operate in accordance with the pre-selected parameters in an automated manner. Consequently, the control electronics controls operation of the drive 105, a heater (not shown), the carousel 104, the first and second arms 112 and 114, and the mechanism 115 for decanting the samples from the crucibles 108 into the respective casting dishes 109. The control electronics is also arranged to control operation of the access door (not shown) at the access port 116 when the first or second arms 112, 114 are in use. In one specific embodiment a drive shaft of the carousel 104 is arranged for imparting an oscillating movement about the axis of the carousel 104 and is also controlled by the control system.

In another variation of the described embodiment a further furnace (not shown) may be used for pre-heating (or "pre- roasting", typically at a temperature of the order of 500 ° C) of the samples to initiate chemical processes prior to forming the fused (homogenized) samples using the furnace 100 at a temperature that may be of the order of 1000 ° C.

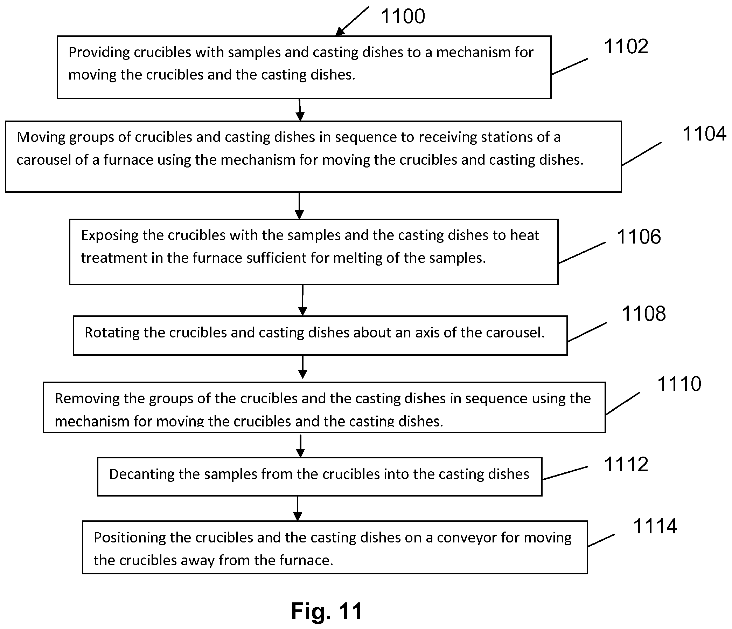

Referring now to Figure 11, a flow chart of a method 1100 of preparing fused (homogenised) samples and heating casting dishes is now described. The furnace may be the above-described furnace 100. The method 1100 comprises the initial step 1102 of providing crucibles with samples and casting dishes to a mechanism for moving the crucibles and the casting dishes. Further, the method 1100 comprises step 1104 of moving groups of the crucibles and the casting dishes in sequence to respective receiving stations of a carousel of the furnace using the mechanism for moving the crucibles and casting dishes. Further, the method 1100 comprises step 1106 of exposing the crucibles and the casting dishes to heat treatment in the furnace sufficient for melting of the samples. Step 1108 rotates
the crucibles and casting dishes about an axis of the carousel and step 1110 removes the groups of crucibles and the casting dishes in sequence using the mechanism for moving the crucibles and the casting dishes. Step 1112 decants the samples from the crucibles into the respective casting dishes (at positions inside or outside of the furnace) and step 1114 positions the crucibles and the casting dishes on a conveyor for moving the crucibles away from the furnace.

In a variation of the described embodiment the carousel may for example also comprise two or more component carousels that are positioned above one another. The receiving stations of a first component carousel may have apertures that are arranged for receiving the crucibles 108 and the receiving stations of a second carousel may have apertures arranged for receiving the casting dishes 109. Alternatively, each component carousel may be arranged such that the crucibles and the casting dishes are placeable in each carousel component in an alternating manner.

## Claims

1. A furnace (100) for preparing fused samples, the furnace comprising:
a housing (102);
a carousel (104) positioned within the housing (102) and arranged to rotate about an axis, the carousel (104) having a plurality of receiving stations (106), the receiving stations (106) being arranged such that the crucibles (108) with the samples and also casting dishes (109) can be received by the carousel;
a heater arranged to heat the samples to a temperature that is sufficient to melt the samples in the crucibles (108); and
at least one mechanism (110) for:
loading and unloading the carousel (104) with the crucibles (108);
loading and unloading the carousel (104) with the casting dishes (109); and
decanting the melted samples from the crucibles (108) into the casting dishes (109);
wherein the housing (102) has an access port (116) in a side wall portion through which in use the crucibles (108) and the casting dishes (109) are loaded and unloaded in a horizontal direction;
**characterized in that** the at least one mechanism (102) comprises a first arm (112) having a portion for supporting a crucible (108) and a casting dish (109) and being arranged for contraction and extension along a length of the arm whereby the first arm (112) is arranged such that a crucible (108) and a casting dish (109) can be moved between a receiving station (106) of the carousel (104) and a position that is remote from the carousel (104), the first arm (112) being arranged such that a crucible (108) and a respective casting dish (109) can be moved simultaneously between a receiving station (106) of the carousel (104) and a position that is remote from the carousel (104); and
**in that** the at least one mechanism (110) comprises a second arm (114) having a portion for supporting a crucible (108) and a casting dish (109) and being arranged for contraction and extension along a length of the arm whereby the second arm (114) is arranged such that a crucible (108) and a casting dish (109) can be moved between a receiving station (106) of the carousel (104) and a position that is remote from the carousel (104), the second arm (114) being arranged such that a crucible (108) and a respective casting dish (109) can be moved between a receiving station (106) of the carousel (104) and a position that is remote from the carousel (104).

2. The furnace (100) of claim 1 wherein the at least one mechanism (110) is arranged to move at least one crucible (108) and at least one casting dish (109) simultaneously.

3. The furnace (100) of claim 1 or 2 wherein the at least one mechanism (110) comprises a respective component mechanism that is arranged to load the carousel (104) simultaneously with the crucibles (108) and the casting dishes (109) and a respective component mechanism that is arranged to decant the melted samples from the crucibles (108) into respective casting dishes (109).

4. The furnace (100) of any one of the preceding claims wherein the at least one mechanism (110) is arranged such that one crucible (108) and one respective casting dish (109) are moved together.

5. The furnace (100) of any one of any one of the preceding claims wherein the at least one mechanism (110) comprises a component mechanism for decanting melted samples from the crucibles (108) into the casting dishes (109) and wherein that component mechanism is positioned outside of the housing (102).

6. The furnace (100) of any one of the preceding claims comprising a control system that is arranged to control operation of the furnace (100) in an automated manner;
wherein the control system is configured to effect removal of the crucible (108) and a respective casting dish (109) after the sample forms a homogeneous glass when cooled subsequent to the heat treatment.

7. The furnace (100) any one of the preceding claims wherein the furnace (100) is arranged to impart a rocking, oscillating or vibrating motion to the samples in the crucibles (108) when the crucibles (108) are positioned in the receiving stations (106) and are exposed to heat treatment.

8. The furnace (100) of any one of the preceding claims wherein the heater is arranged for heating both the crucibles (108) the samples and the casting dishes (109).

## Patentansprüche

1. Ein Ofen (100) zur Herstellung von geschmolzenen Proben, wobei der Ofen folgende Merkmale aufweist:
ein Gehäuse (102);
ein Karussell (104), das in dem Gehäuse (102) positioniert und dahingehend angeordnet ist, sich um eine Achse zu drehen, wobei das Karussell (104) eine Mehrzahl von Aufnahmestationen (106) aufweist, wobei die Aufnahmestationen (106) derart angeordnet sind, dass die Tiegel (108) mit den Proben und auch Gussschalen (109) von dem Karussell aufgenommen werden können;
eine Heizvorrichtung, die angeordnet ist, um die Proben auf eine Temperatur zu erwärmen, die ausreicht, um die Proben in den Tiegeln (108) zu schmelzen; und
zumindest einen Mechanismus (110) zum:
Be- und Entladen des Karussells (104) mit den Tiegeln (108);
Be- und Entladen des Karussells (104) mit den Gussschalen (109) und
Umfüllen der geschmolzenen Proben aus den Tiegeln (108) in die Gussschalen (109);
wobei das Gehäuse (102) in einem Seitenwandabschnitt eine Zugangsöffnung (116) aufweist, durch die die Tiegel (108) und die Gussschalen (109) bei Gebrauch in einer horizontalen Richtung be- und entladen werden;
**dadurch gekennzeichnet, dass** der zumindest eine Mechanismus (102) einen ersten Arm (112) aufweist, der einen Abschnitt zum Tragen eines Tiegels (108) und einer Gussschale (109) aufweist und der zum Zusammenziehen und Ausdehnen entlang einer Länge des Arms angeordnet ist, wodurch der erste Arm (112) derart angeordnet ist, dass ein Tiegel (108) und eine Gussschale (109) zwischen einer Aufnahmestation (106) des Karussells (104) und einer von dem Karussell (104) entfernten Position bewegt werden können, der erste Arm (112) derart angeordnet ist, dass ein Tiegel (108) und eine entsprechende Gussschale (109) gleichzeitig zwischen einer Aufnahmestation (106) des Karussells (104) und einer von dem Karussell (104) entfernten Position bewegt werden können; und,
dass der zumindest eine Mechanismus (110) einen zweiten Arm (114) aufweist, der einen Abschnitt zum Tragen eines Tiegels (108) und einer Gussschale (109) aufweist und der zum Zusammenziehen und Ausdehnen entlang einer Länge des Arms angeordnet ist, wodurch der zweite Arm (114) derart angeordnet ist, dass ein Tiegel (108) und eine Gussschale (109) zwischen einer Aufnahmestation (106) des Karussells (104) und einer von dem Karussell (104) entfernten Position bewegt werden können, der zweite Arm (114) derart angeordnet ist, dass ein Tiegel (108) und eine entsprechende Gussschale (109) zwischen einer Aufnahmestation (106) des Karussells (104) und einer von dem Karussell (104) entfernten Position bewegt werden können.

2. Der Ofen (100) gemäß Anspruch 1, bei dem der zumindest eine Mechanismus (110) dahingehend angeordnet ist, zumindest einen Tiegel (108) und zumindest eine Gussschale (109) gleichzeitig zu bewegen.

3. Der Ofen (100) gemäß Anspruch 1 oder 2, bei dem der zumindest eine Mechanismus (110) einen entsprechenden Komponentenmechanismus, der dahingehend angeordnet ist, das Karussell (104) gleichzeitig mit den Tiegeln (108) und den Gussschalen (109) zu beladen, und einen entsprechenden Komponentenmechanismus aufweist, der dahingehend angeordnet ist, die geschmolzenen Proben aus den Tiegeln (108) in entsprechende Gussschalen (109) umzufüllen.

4. Der Ofen (100) gemäß einem der vorhergehenden Ansprüche, bei dem der zumindest eine Mechanismus (110) derart angeordnet ist, dass ein Tiegel (108) und eine entsprechende Gussschale (109) gemeinsam bewegt werden.

5. Der Ofen (100) gemäß einem der vorhergehenden Ansprüche, bei dem der zumindest eine Mechanismus (110) einen Komponentenmechanismus zum Umfüllen von geschmolzenen Proben aus den Tiegeln (108) in die Gussschalen (109) aufweist und bei dem dieser Komponentenmechanismus außerhalb des Gehäuses (102) positioniert ist.

6. Der Ofen (100) gemäß einem der vorhergehenden Ansprüche, der ein Steuersystem aufweist, das dahingehend angeordnet ist, den Betrieb des Ofens (100) auf eine automatisierte Weise zu steuern;
wobei das Steuersystem dazu konfiguriert ist, ein Entfernen des Tiegels (108) und einer entsprechenden Gussschale (109) zu bewirken, nachdem die Probe, folgend auf ein Abkühlen nach der Wärmebehandlung, ein homogenes Glas bildet.

7. Der Ofen (100) gemäß einem der vorhergehenden Ansprüche, wobei der Ofen (100) dahingehend angeordnet ist, eine Schaukel-, Oszillations- oder Vibrationsbewegung auf die Proben in den Tiegeln (108) auszuüben, wenn die Tiegel (108) in den Aufnahmestationen (106) positioniert und einer Wärmebehandlung ausgesetzt sind.

8. Der Ofen (100) gemäß einem der vorhergehenden Ansprüche, bei dem die Heizvorrichtung zum Erwärmen sowohl der Tiegel (108), der Proben als auch der Gussschalen (109) angeordnet ist.

## Revendications

1. Four (100) pour la préparation d'échantillons fusionnés, le four comprenant:
un logement (102);
un carrousel (104) positionné à l'intérieur du logement (102) et disposé de manière à tourner autour d'un axe, le carrousel (104) présentant une pluralité de postes de réception (106), les postes de réception (106) étant disposés de sorte que les creusets (108) avec les échantillons et les coupelles de coulée (109) puissent être reçus par le carrousel;
un dispositif de chauffage disposé de manière à chauffer les échantillons à une température suffisante pour les faire fondre dans les creusets (108); et
au moins un mécanisme (110) destiné à:
charger et décharger le carrousel (104) avec les creusets (108);
charger et décharger le carrousel (104) avec les coupelles de coulée (109); et
décanter les échantillons fusionnés des creusets (108) dans les coupelles de coulée (109);
dans lequel le logement (102) présente un orifice d'accès (116) dans une partie de paroi latérale à travers laquelle, pendant l'utilisation, les creusets (108) et les coupelles de coulée (109) sont chargés et déchargés dans une direction horizontale;
**caractérisé par le fait que** l'au moins un mécanisme (102) comprend un premier bras (112) présentant une partie destinée à supporter un creuset (108) et un coupelle de coulée (109) et disposé de manière à se rétracter et s'étendre sur une longueur du bras, où le premier bras (112) est disposé de sorte qu'un creuset (108) et une coupelle de coulée (109) puissent être déplacés entre un poste de réception (106) du carrousel (104) et une position qui est distante du carrousel (104), le premier bras (112) étant disposé de sorte qu'un creuset (108) et une coupelle de coulée (109) respective puissent être déplacés simultanément entre un poste de réception (106) du carrousel (104) et une position qui est distante du carrousel (104); et
**par le fait que** l'au moins un mécanisme (110) comprend un deuxième bras (114) présentant une partie destinée à supporter un creuset (108) et une coupelle de coulée (109) et disposé de manière à se rétracter et s'étendre sur une longueur du bras, où le deuxième bras (114) est disposé de sorte qu'un creuset (108) et une coupelle de coulée (109) puissent être déplacés entre un poste de réception (106) du carrousel (104) et une position qui est distante du carrousel (104), le deuxième bras (114) étant disposé de sorte qu'un creuset (108) et une coupelle de coulée (109) respective puissent être déplacés entre un poste de réception (106) du carrousel (104) et une position qui est distante du carrousel (104).

2. Four (100) selon la revendication 1, dans lequel l'au moins un mécanisme (110) est disposé de manière à déplacer simultanément au moins un creuset (108) et au moins une coupelle de coulée (109).

3. Four (100) selon la revendication 1 ou 2, dans lequel l'au moins un mécanisme (110) comprend un mécanisme composant respectif qui est disposé de manière à charger le carrousel (104) simultanément avec les creusets (108) et les coupelles de coulée (109) et un mécanisme composant respectif qui est conçu de manière à décanter les échantillons fusionnés des creusets (108) dans les coupelles de coulée respectives (109).

4. Four (100) selon l'une quelconque des revendications précédentes, dans lequel l'au moins un mécanisme (110) est disposé de sorte qu'un creuset (108) et une coupelle de coulée respective (109) soient déplacés ensemble.

5. Four (100) selon l'une quelconque des revendications précédentes, dans lequel l'au moins un mécanisme (110) comprend un mécanisme composant destiné à décanter les échantillons fusionnés des creusets (108) dans les coupelles de coulée (109) et dans lequel le mécanisme composant est positionné à l'extérieur du logement (102).

6. Four (100) selon l'une quelconque des revendications précédentes, comprenant un système de commande qui est disposé de manière à commander le fonctionnement du four (100) de manière automatisée;
dans lequel le système de commande est configuré pour effectuer le retrait du creuset (108) et d'une coupelle de coulée (109) respective après que l'échantillon ait formé un verre homogène lorsqu'il a été refroidi après le traitement thermique.

7. Four (100) selon l'une quelconque des revendications précédentes, dans lequel le four (100) est disposé de manière à conférer un mouvement de balancement, d'oscillation ou de vibration aux échantillons dans les creusets (108) lorsque les creusets (108) sont positionnés dans les postes de réception (106) et sont soumis à un traitement thermique.

8. Four (100) selon l'une quelconque des revendications précédentes, dans lequel le dispositif de chauffage est conçu pour chauffer tant les creusets (108), les échantillons que les coupelles de coulée (109).
